# EUROPEAN PATENT APPLICATION

(11) **EP 4 262 052 A1**
(43) Date of publication of application: **18.10.2023**
(21) Application number: 21917865.4
(22) Date of filing: 10.11.2021
(51) Int. Cl.: H02J 50/80, H02J 50/10, H02J 7/04

(54) **ELECTRONIC DEVICE FOR TRANSMITTING POWER WIRELESSLY AND OPERATING METHOD THEREFOR**

(30) Priority: 08.01.2021 KR 20210002751
(71) Applicant: Samsung Electronics Co., Ltd., Suwon-si, Gyeonggi-do 16677 (KR)
(72) Inventor: HA, Mincheol, Suwon-si, Gyeonggi-do 16677 (KR); KIM, Kihyun, Suwon-si, Gyeonggi-do 16677 (KR); KIM, Dongzo, Suwon-si, Gyeonggi-do 16677 (KR); KIM, Jihye, Suwon-si, Gyeonggi-do 16677 (KR); NOH, Yunjeong, Suwon-si, Gyeonggi-do 16677 (KR); SON, Keyic, Suwon-si, Gyeonggi-do 16677 (KR); YU, Taehyeon, Suwon-si, Gyeonggi-do 16677 (KR); LEE, Kyungmin, Suwon-si, Gyeonggi-do 16677 (KR); CHUNG, Hyungkoo, Suwon-si, Gyeonggi-do 16677 (KR)
(74) Representative: Nederlandsch Octrooibureau
(86) International application number: PCT/KR2021/016349
(87) International publication number: WO 2022/149703

(57) **Abstract**

According to various embodiments, an electronic device for transmitting charging power to at least one wireless power receiving device comprises: a power transmission coil; a power provider which provides DC charging power; an inverter which applies AC charging power to the power transmission coil, on the basis of the DC charging power provided from the power provider; a communication module configured to identify a first packet from the at least one wireless power receiving device; and at least one processor, wherein the at least one processor may be configured to identify the level of the DC charging power, which is provided by the power provider to the inverter, and perform at least one operation for reducing the AC charging power in response to the identification of the first packet requesting an increase in power, on the basis of the identified level of the DC charging power exceeding a first reference value. Various other embodiments can be possible.

## Description

### [Technical Field]

Various embodiments of the disclosure relate to an electronic device for transmitting wireless power and an operating method therefor.

### [Background Art]

Wireless power transmission technology is a method of transmitting power using an electromagnetic field induced in a coil. In the wireless power transmission technology, electric energy may be supplied by applying a current to a transmitting coil to generate an electromagnetic field and forming an induced current in a receiving coil by the generated electromagnetic field.

A wireless power transmitting device may receive direct current (DC) power and convert the received DC power to alternating current (AC) power to transmit power to a wireless power receiving device. In order to increase power supply to the wireless power receiving device, the wireless power transmitting device may lower the driving frequency in the case of a frequency variable method and increase a drain voltage applied to an inverter in the case of a voltage variable method.

### [Detailed Description of the Invention]

### [Technical Problem]

When power is transmitted from the wireless power transmitting device to the wireless power receiving device, efficiency reduction may occur depending on the high power to be transmitted or the state of the wireless power receiving device.

For limiting operation of the power supply of the wireless power transmitting device, a method of limiting the lower limit of the driving frequency may be used in the case of the frequency variable method, and a method of limiting the upper limit of the drain voltage applied to the inverter in the case of the voltage variable method. Even if the lower limit of the driving frequency and/or the upper limit of the drain voltage is limited, in the wireless power transmitting device, an increase in the power supply due to an increase in the current may occur, and efficiency reduction and/or heat generation may occur. According to various embodiments, an electronic device for transmitting wireless power and an operating method therefor may monitor DC power applied when an over-power situation occurs due to excessive AC power transmission, and limit the transmitted AC power when the DC power exceeds predetermined power.

### [Technical Solution]

According to various embodiments, an electronic device for transmitting charging power to at least one wireless power receiving device may include a power transmission coil, a power supplier configured to provide DC charging power, an inverter configured to apply AC charging power to the power transmission coil based on the DC charging power provided from the power supplier, a communication module configured to identify a control error packet (CEP) from the at least one wireless power receiving device, and at least one processor (e.g., MCU or transmission IC), wherein the at least one processor may be configured to identify the level of the DC charging power provided to the inverter by the power supplier, and perform at least one operation for reducing the AC charging power in response to the identification of the CEP requesting an increase in power based on the identified level of the DC charging power exceeding a first reference value.

According to various embodiments, an operation method of an electronic device may include identifying a level of DC charging power provided to an inverter of the electronic device by a power supplier of the electronic device, controlling a communication module of the electronic device to identify a CEP from at least one wireless power receiving device, and performing at least one operation for reducing AC charging power applied from the inverter to a power transmission coil of the electronic device in response to identification of the CEP requesting an increase in power based on the identified level of the DC charging power exceeding a first reference value.

According to various embodiments, an electronic device for transmitting charging power to at least one wireless power receiving device may include a power transmission coil; an inverter configured to generate the charging power in the power transmission coil; a power sensor configured to detect a voltage and/or current of a signal applied to the power transmission coil or the inverter; a communication module configured to receive a packet from the at least one wireless power receiving device; and at least one processor, wherein the at least one processor may be configured to identify the voltage and/or current detected using the power sensor, and perform at least one operation for reducing the charging power in response to identification of the packet requesting an increase in power received using the communication module based on the identified level of the voltage and/or current exceeding a first reference value.

### [Advantageous Effects]

According to various embodiments, there may be provided an electronic device capable of identifying the level of DC charging power and performing at least one operation for reducing AC charging power in response to identification of a CEP requesting an increase in power based on the identified level of the DC charging power exceeding a reference value, and an operation method therefor.

Accordingly, it is possible to prevent heat generation and unstable power supply due to over-power of an electronic device that transmits wireless power.

### [Brief Description of Drawings]

FIG. 1 is a block diagram illustrating an electronic device and a wireless power receiving device according to an embodiment.
FIG. 2 is a block diagram illustrating an electronic device capable of wirelessly transmitting power according to an embodiment.
FIG. 3 is a flowchart illustrating an operation method of an electronic device according to an embodiment.
FIG. 4 is a block diagram illustrating an electronic device capable of wirelessly transmitting power according to an embodiment.
FIG. 5 is a flowchart illustrating an operation method of an electronic device according to an embodiment.
FIG. 6 is a flowchart illustrating an operation method of an electronic device according to an embodiment.
FIG. 7 is a block diagram illustrating an electronic device capable of wirelessly transmitting power according to an embodiment.
FIG. 8 is a flowchart illustrating an operation method of an electronic device according to an embodiment.
FIG. 9 is a diagram illustrating an operation of an electronic device according to an embodiment.
FIG. 10 is a block diagram illustrating an electronic device in a network environment according to various embodiments.

### [Mode for Carrying out the Invention]

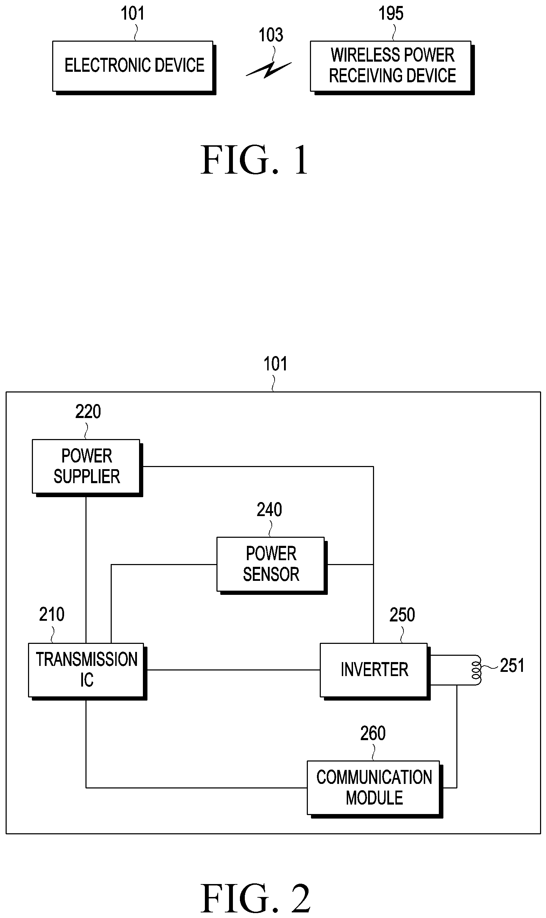

FIG. 1 is a block diagram illustrating an electronic device and a wireless power receiving device according to an embodiment.

Referring to FIG. 1, an electronic device 101 according to an embodiment may wirelessly transmit power 103 to a wireless power receiving device 195. The electronic device 101 may transmit the power 103 to the wireless power receiving device 195 according to various charging methods. For example, the electronic device 101 may transmit the power 103 according to an inductive method. When the electronic device 101 is performed in the inductive method, the electronic device 101may include, for example, a power source, a DC-AC conversion circuit, an amplifier circuit, an impedance matching circuit, at least one capacitor, at least one coil, and/or a communication modulation and demodulation circuit. The at least one capacitor may form a resonant circuit together with the at least one coil. In an embodiment, the electronic device 101 may be implemented in a manner defined in a wireless power consortium (WPC) standard (or Qi standard). For example, the electronic device 101 may transmit the power 103 according to a resonant method. In the case of the resonant method, the electronic device 101 may include, for example, a power source, a DC-AC conversion circuit, an amplifier circuit, an impedance matching circuit, at least one capacitor, at least one coil, and/or an out band communication circuit (e.g., a Bluetooth low energy {BLE} communication circuit). The at least one capacitor and the at least one coil may form a resonant circuit. In an embodiment, the electronic device 101 may be implemented in a manner defined in the alliance for wireless power (A4WP) standard (or air fuel alliance {AFA} standard). The electronic device 101 may include a coil capable of generating an induced magnetic field when a current flows according to the resonant method or the inductive method. An operation of generating an induced magnetic field by the electronic device 101 may be expressed as that the electronic device 101 transmits the power 103 wirelessly. In an embodiment, the wireless power receiving device 195 may include a coil in which induced electromotive force is generated by a magnetic field whose level changes over time and which is provided in the vicinity of the coil. An operation of generating an induced electromotive force through the coil may be expressed as that the wireless power receiving device 195 wirelessly receives the power 103. Alternatively, the wireless power receiving device 195 using the inductive method may perform out-of-band communication.

The electronic device 101 according to an embodiment of the disclosure may communicate with the wireless power receiving device 195. For example, the electronic device 101 may perform communication with the wireless power receiving device 195 using at least one coil for wireless charging and/or a frequency range for transmitting wireless power according to an in-band method. The electronic device 101 or the wireless power receiving device 195 may change a load (or impedance) according to, for example, an on/off keying method. The electronic device 101 or the wireless power receiving device 195 may determine data from a counterpart device by measuring a change in the load (or change in the impedance) based on a change in the current, voltage, or power of the coil. According to the in-band method, the determining of the data from the counterpart device may be referred to as receiving data from the counterpart device. For example, the electronic device 101 may communicate with the wireless power receiving device 195 according to the out-band method. The electronic device 101 or the wireless power receiving device 195 may transmit and receive data using a communication circuit (e.g., a BLE communication module) provided separately from a coil or patch antenna.

In this document, when the electronic device 101 or the wireless power receiving device 195 performs a specific operation, it may mean that various hardware included in the electronic device 101 or the wireless power receiving device 195, for example, a control circuit such as a processor (e.g., a transmission IC and/or a micro controlling unit {MCU}), or a coil performs a specific operation. Alternatively, when the electronic device 101 or the wireless power receiving device 195 performs a specific operation, it may mean that the processor controls other hardware to perform the specific operation. Alternatively, when the electronic device 101 or the wireless power receiving device 195 performs a specific operation, it may mean that execution of an instruction for performing a specific operation stored in a storage circuit (e.g., memory) of the electronic device 101 or the wireless power receiving device 195 causes the processor or other hardware to perform the specific operation.

FIG. 2 is a block diagram illustrating an electronic device capable of wirelessly transmitting power according to an embodiment.

According to an embodiment, the electronic device 101 may include at least one of a transmission IC 210, a power supplier 220, a power sensor 240, an inverter 250, a power transmission coil 251, and a communication module 260.

According to an embodiment, the transmission IC 210 may perform at least one operation for providing power to the wireless power receiver 195. The transmission IC 210 may perform at least one operation for identifying information from the wireless power receiving device 195. The transmission IC 210 may be a controller capable of performing at least some of the above-described operations, and thus may be referred to as a controller or a processor. The transmission IC 210 may be implemented as a controller exclusively for wireless charging, but may be implemented as one with a main processor (e.g., MCU) that manages the overall operation of the electronic device 101 in some cases. Those skilled in the art will understand that the transmission IC 210 is not limited as long as it is a controller having capability that can process at least some of the above-described procedures.

According to an embodiment, the transmission IC 210 may control the inverter 250 so that a signal is applied to the power transmission coil 251. For example, the transmission IC 210 may apply a pulse (e.g., a gate driving signal) to the inverter 250 or may control other hardware (e.g., a gate driver) to apply the pulse. Although only the power transmission coil 251 is shown in FIG. 2, those skilled in the art will understand that at least one capacitor may be further connected to the power transmission coil 251.

In an embodiment, the inverter 250 may output AC power using DC power (e.g., a bridge voltage, a driving voltage {VDD}, and a drain voltage of a MOSFET) input from the power supplier 220. Here, the output of AC power may be understood as at least one of application of AC voltage and application of AC current. The inverter 250 may provide AC power to the power transmission coil 251. The power transmission coil 251 may wirelessly transmit power to the outside using the AC power received from the inverter 250. Here, the wirelessly transmitting of the power to the outside may be understood as an operation in which an induced magnetic field is generated from the power transmission coil 251 by the electronic device 101 applying a current to the power transmission coil 251.

According to an embodiment, the power supplier 220 may provide operating power of the transmission IC 210. The power supplier 220 may convert a voltage of DC power from the power source (not shown) and provide the converted voltage to the inverter 250. The power supplier 220 may be implemented as any one of a buck converter, a boost converter, and a buck/boost converter, but is not limited thereto.

According to an embodiment, the power sensor 240 may sense a voltage and/or current provided to the inverter 250. For example, the transmission IC 210 may identify the level of the power provided to the inverter 250 by the power supplier 220 based on data from the power sensor 240. According to various embodiments, the power sensor 240 may sense the voltage and/or current applied to the coil.

According to an embodiment, the wireless power receiving device (e.g., the wireless power receiving device 195) may transmit a response. For example, the wireless power receiving device 195 may perform amplitude modulation (e.g., load change) based on information corresponding to the response. For example, the wireless power receiving device 195 may cause a change in amplitude measured by the power sensor 240 by changing a load by turning on/off a switch included therein. The change in the load of the wireless power receiving device 195 may be detected as a change in amplitude of a voltage or current applied to the coil in the electronic device 101. For example, the electronic device 101 may detect a change in the load of the wireless power receiving device 195 using the communication module 260.

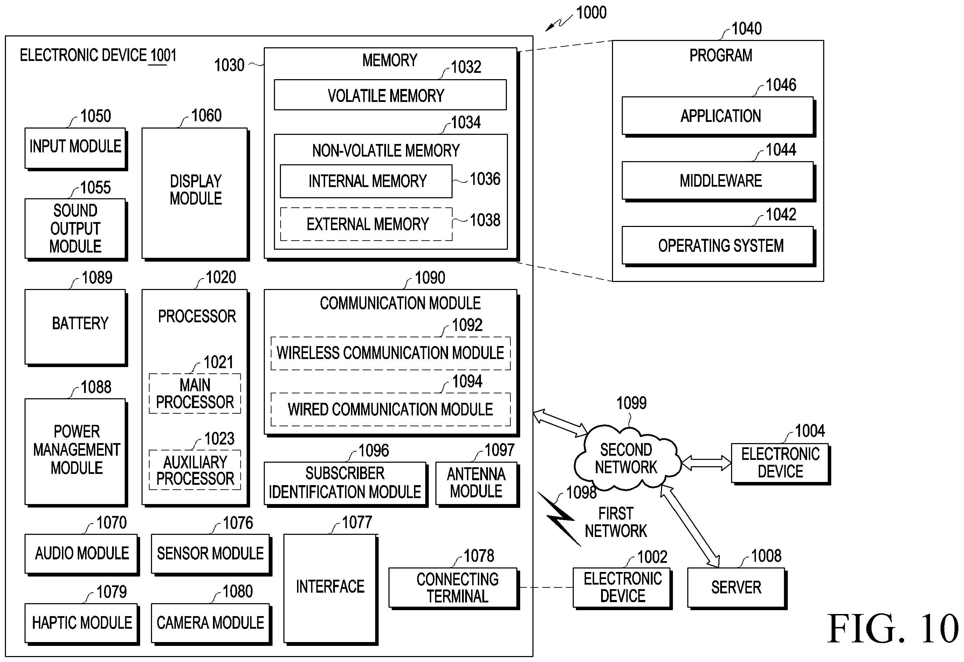

According to an embodiment, the communication module 260 may demodulate a signal output from the power transmission coil 251. The transmission IC 210 may identify information transmitted by the wireless power receiving device 195 based on the demodulation result. An operation in which the wireless power receiving device 195 performs load modulation may be referred to as transmitting a communication signal. An operation in which the electronic device 101 performs demodulation and identifies information based on the demodulation result may be referred to as receiving a communication signal. According to an embodiment, the communication module may receive a communication signal by passing through a designated frequency band of a rectified signal input using a filter (not shown). While passing through the filter (not shown), noise of a frequency other than a frequency corresponding to modulation and demodulation of in-band communication may be filtered. The communication module 260 may demodulate the filtered signal and identify information based on the demodulation result. Meanwhile, the above-described in-band communication is merely exemplary, and the electronic device 101 and the wireless power receiving device 195 may perform communication through out-of-band communication. For example, when performing out-of-band communication, the transmission IC 210 may transmit and receive information related to wireless power transmission control to and from the wireless power receiving device 195 using an antenna module (e.g., the antenna module 1078 of FIG. 10).

According to an embodiment, the electronic device 101 may identify a power control feedback signal from the wireless power receiving device 195. The power control feedback signal may include a control error packet (CEP) defined in the WPC standard. The CEP may include a control error value (CEV). For example, the CEV may be an integer (e.g., -1, 0, +1) between -128 and +127.

The wireless power receiving device 195 may select a desired control point, for example, a desired charging current and/or charging voltage, and determine an actual control point that is currently operated. The wireless power receiving device 195 may calculate the CEV based on the desired control point and the actual control point, and transmit the CEV as the CEP. The electronic device 101 may transmit power by controlling the amplitude, frequency, and/or duty cycle based on the CEP received from the wireless power receiving device 195.

According to an embodiment, the wireless power receiving device 195 may transmit a CEP having a negative CEV in order to request a reduction in the level of charging power transmitted by the electronic device 101. The wireless power receiving device 195 may transmit a CEP having a positive CEV in order to request an increase in the level of charging power transmitted by the electronic device 101. The wireless power receiving device 195 may transmit a CEP having a CEV of 0 (zero) based on the fact that the desired control point and the actual control point are the same.

According to an embodiment, the CEP may be transmitted and received at regular time intervals in a power transfer phase. The electronic device 101 may stop the transmission of the power when the CEP is not received within a predetermined time interval.

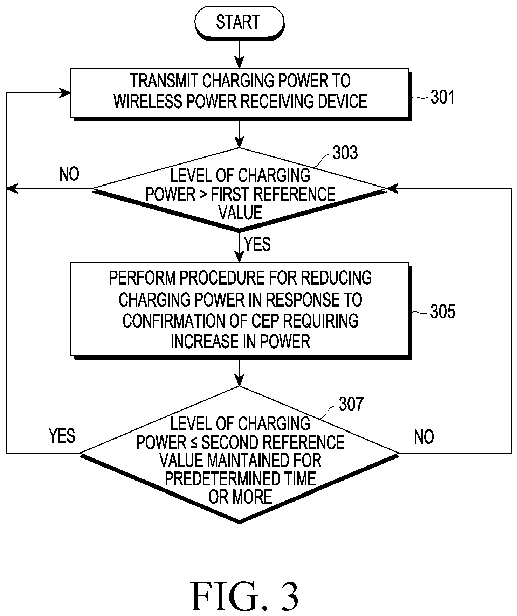

FIG. 3 is a flowchart illustrating an operation method of an electronic device according to an embodiment. FIG. 3 will be described with reference to FIG. 2.

According to an embodiment, in operation 301, the electronic device 101 (e.g., the transmission IC 210) may transmit charging power to the wireless power receiving device 195. Referring to FIG. 2, the transmission IC 210 may control the power supplier 220 to provide DC power to the inverter 250, and the inverter 250 may apply AC power to the power transmission coil 251 using the DC power input from the power supplier 220. The power transmission coil 251 may transmit charging power to the wireless power receiving device 195 using the AC power received from the inverter 250. While performing operation 301, the electronic device 101 may identify a CEP from the wireless power receiving device 195 and, in response to the identified CEP, may transmit the controlled charging power. For example, while performing operation 301, the electronic device 101 may perform an operation of increasing the transmitted charging power in response to the identification of the CEP (e.g., the CEP having a positive CEV) requiring an increase in power.

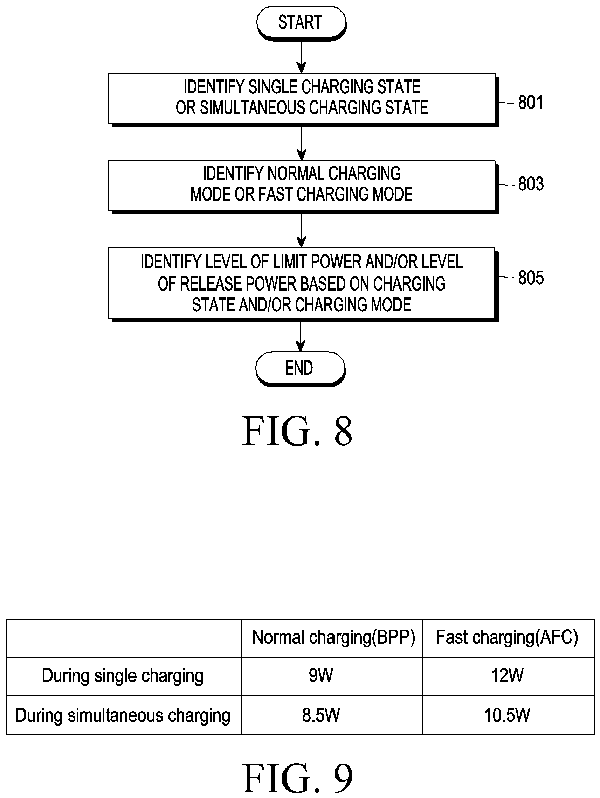

In operation 303, according to an embodiment, the electronic device 101 may determine whether the level of the DC power (voltage and/or current) input to the inverter 250 exceeds a first reference value. For example, the electronic device 101 may determine whether the level of the DC power provided from the power supplier 220 to the inverter 250 exceeds a predetermined level of limit power (e.g., 10W). The limit power may be a threshold value of the power provided to the inverter 250 from the power supplier 220. For example, the electronic device 101 may identify the level of the power provided from the power supplier 220 to the inverter 250 using the power sensor 240. The level of the limit power may be determined according to a power transmission state and/or a power transmission mode of the electronic device 101, which will be described later with reference to FIG. 8. When the level of the charging power is equal to or less than the first reference value (303 - No), the electronic device 101 may perform an operation for increasing the level of the charging power based on the value included in the CEP.

The electronic device 101 may perform operation 305 when the level of DC power input to the inverter 250 exceeds the predetermined level of the limit power (303-Yes).

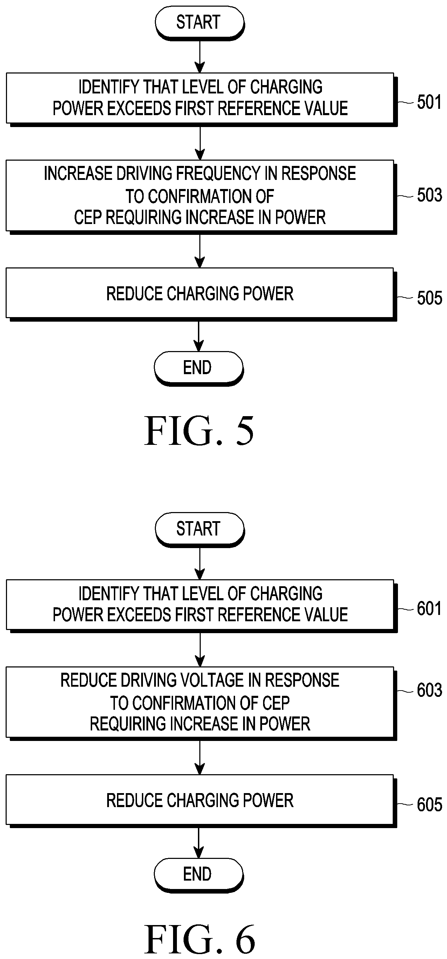

In operation 305, according to an embodiment, the electronic device 101 may perform an operation for reducing the transmitted charging power in response to identification of the CEP requesting an increase in power. For example, when the level of the DC power input to the inverter 250 exceeds the level of the limit power, the electronic device 101 may perform the operation for reducing the transmitted charging power despite the identification of the CEP requesting the increase in power. The operation for reducing the transmitted charging power will be described later with reference to FIGS. 5 and 6. Accordingly, even when the level of the charging power exceeds the first reference value, the increase in the level of the charging power may be prevented based on the CEP.

In operation 307, according to an embodiment, the electronic device 101 may stop the operation for reducing the transmitted charging power, which has been performed in operation 305, based on the fact that the level of the DC power input to the inverter 250 is equal to or less than a second reference value. For example, the electronic device 101 may stop the operation for reducing the transmitted charging power based on the fact that the level of the DC power provided from the power supplier 220 to the inverter 250 is equal to or less than a predetermined level (e.g., 9.5 W) of release power. For example, the second reference value may be the level of the release power. Meanwhile, it is merely an example that an over-power protection operation is designed to have a hysteretic characteristic by configuring the second reference value to be different from the first reference value, and those skilled in the art will understand that the second reference value may be configured equal to the first reference value depending on implementation. The level of the release power may be determined according to the power transmission state and/or power transmission mode of the electronic device 101, and this will be described later with reference to FIG. 8. In addition, the electronic device 101 may stop the operation for reducing the transmitted charging power based on the fact that the level of the DC power provided to the inverter 250 is equal to or less than the second reference value for a reference time or longer. For example, the reference time may be configured in advance, and as another example, may be determined according to the power transmission state and/or power transmission mode of the electronic device 101. Depending on the result of operation 307, the electronic device 101 may perform operation 301 or operation 303 again.

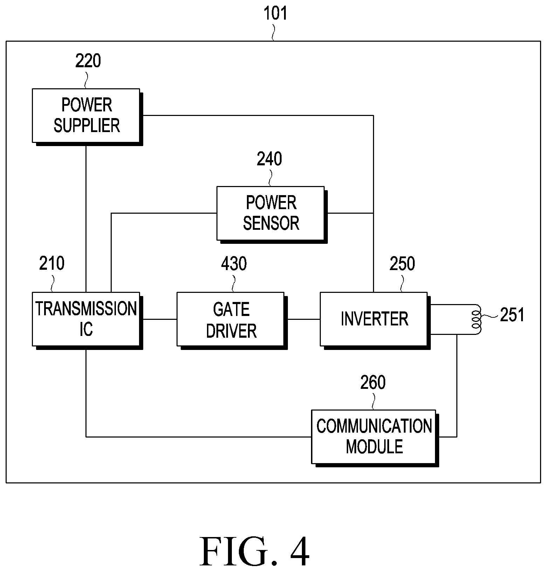

FIG. 4 is a block diagram illustrating an electronic device capable of wirelessly transmitting power according to an embodiment.

The electronic device 101 according to an embodiment may include at least one of a transmission IC 210, a power supplier 220, a power sensor 240, an inverter 250, a power transmission coil 251, a gate driver 430, and a communication module 260. For example, the gate driver 430 and the inverter 250 may be implemented as one hardware or as independent hardware. As another example, the gate driver 430 may be included in the transmission IC 210.

According to an embodiment, the gate driver 430 may be positioned between the transmission IC 210 and the gate driver 430. For example, the gate driver 430 may be electrically connected to the transmission IC 210 and the gate driver 430.

According to an embodiment, the gate driver 430 may apply a driving signal to a gate of a transistor included in the inverter 250. The driving signal may be, for example, in the form of a pulse that is subjected to pulse width modulation (PWM). The inverter 250 may output AC power using a driving voltage (or bridge voltage) from the power supplier 220 and a driving signal input from the gate driver 430. For example, a pulse output from the transmission IC 210 may be provided to the gate driver 430. The gate driver 430 may apply the driving signal to the gate of the transistor of the inverter 250 based on the received pulse. The inverter 250 may apply AC power to the power transmission coil 251 using the driving signal and the driving voltage.

According to an embodiment, the transmission IC 210 may identify the charging mode of the electronic device 101. The charging mode may include, for example, a normal charging mode, a slow charging mode, or a fast charging mode, but is not limited thereto. The transmission IC 210 may control the level of the charging power transmitted to the wireless power receiving device 195 based on the identified charging mode. For example, based on the identified charging mode, the transmission IC 210 may identify the level of limit power and/or release power corresponding to the identified charging mode. For example, the electronic device 101 may include a memory (not shown), and the memory may store information on the level of limit power and/or release power corresponding to the charging mode. In this case, the transmission IC 210 may identify the level of limit power and/or release power corresponding to the identified charging mode based on the information stored in the memory. For another example, the electronic device 101 may receive, from the wireless power receiving device 195, information for changing the limit power and/or release power corresponding to the charging mode. In this case, the transmission IC 210 may identify the level of limit power and/or release power corresponding to the identified charging mode, based on the information received from the wireless power receiving device 195.

FIG. 5 is a flowchart illustrating an operation method of an electronic device according to an embodiment.

According to an embodiment, in operation 501, the electronic device 101 (e.g., the transmission IC 210) may identify that the level of DC power input to the inverter 250 exceeds the level of limit power. For example, the electronic device 101 may identify the level of DC power input to the inverter 250 using the power sensor 240.

In operation 503, according to an embodiment, the electronic device 101 may perform an operation for increasing the driving frequency of the transmitted charging power in response to identification of a CEP requiring an increase in power when the level of DC power input to the inverter 250 exceeds the level of limit power. For example, the electronic device 101 may control a driving signal applied from the gate driver 430 to the inverter 250. The electronic device 101 may perform an operation for increasing the driving frequency of the transmitted charging power by increasing a period by the gate voltage provided from the gate driver 430 to the inverter 250 by a predetermined size, in response to the identification of the CEP requiring the increase in power. In operation 505, the electronic device 101 may perform the operation for reducing the transmitted charging power by the operation for increasing the driving frequency of the transmitted charging power.

FIG. 6 is a flowchart illustrating an operation method of an electronic device according to an embodiment.

According to an embodiment, the electronic device 101 (e.g., the transmission IC 210), in operation 601, may identify that the level of DC power input to the inverter 250 exceeds the level of a first reference value. For example, the first reference value may include limit power.

In operation 603, according to an embodiment, the electronic device 101 may reduce a driving voltage (or a bridge voltage) provided from the power supplier 220 to the inverter 250 in response to identification of the CEP requiring an increase in power, based on the fact that the level of DC power input to the inverter 250 exceeds the first reference value. For example, the electronic device 101 may control the power supplier 220 to reduce the level of the driving voltage provided from the power supplier 220 to the inverter 250 by a predetermined size, in response to the identification of the CEP requiring the increase in power.

In operation 605, the electronic device 101 may perform an operation for reducing transmitted charging power by an operation for reducing the driving voltage provided to the inverter 250.

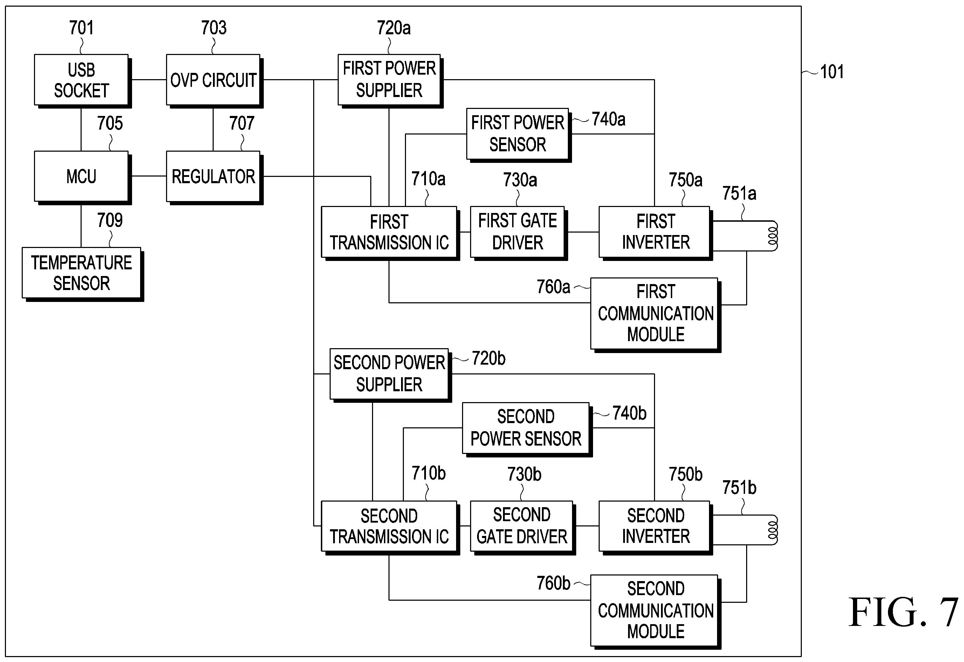

FIG. 7 is a block diagram illustrating an electronic device capable of wirelessly transmitting power according to an embodiment.

According to an embodiment, the electronic device 101 may include a first transmission IC 710a and a second transmission IC 710b. The first transmission IC 710a may provide a signal (e.g., a ping signal or a signal for charging) to a first power transmission coil 751a. The first transmission IC 710a may demodulate the signal output from the first coil 751a using a first communication module 760a, and identify information from the wireless power receiving device based on the demodulation result. The second transmission IC 710b may provide a signal (e.g., a ping signal or a signal for charging) to the second power transmission coil 751a. The second transmission IC 710b may demodulate the signal output from the second power transmission coil 751b using a second communication module 760b, and identify information from the wireless power receiving device based on the demodulation result. Meanwhile, although the electronic device 101 is illustrated as including two transmission ICs in FIG. 7, this is exemplary and the number of transmission ICs included in the electronic device 101 is not limited. In addition, although FIG. 7 shows one power transmission coil corresponding to each transmission IC, this is exemplary and the number of power transmission coils corresponding to each transmission IC is not limited.

According to an embodiment, the first gate driver 730a may apply a driving signal to a gate of a transistor of the first inverter 750a using a pulse received from the first transmission IC 710a. The first inverter 750a may provide AC power to the first coil 751a using a driving signal from the first gate driver 730a and a driving voltage from a first power supplier 720a. A second gate driver 730b may apply a driving signal to the gate of the transistor of the second inverter 750b using the pulse received from the second transmission IC 710b. The second inverter 750b may provide AC power to the second coil 751b using a driving signal from the second gate driver 730b and a driving voltage from the second power supplier 720b.

According to an embodiment, the first transmission IC 710a may identify the level of DC power provided to the first inverter 750a by the first power supplier 720a based on data from a first power sensor 740a. The second transmission IC 710b may identify the level of DC power provided to the second inverter 750b by the second power supplier 720b based on data from the second power sensor 740b.

According to an embodiment, the MCU 705 may transmit and receive data to and from the transmission ICs 710a and 710b. The MCU 705 may receive data from the transmission ICs 710a and 710b and transmit data for controlling the transmission ICs 710a and 710b. The MCU 705 is not limited as long as it is hardware capable of calculation, and may be referred to as a processor.

According to an embodiment, the MCU 705 may transmit a control command to output a signal for charging to the first transmission IC 710a or the second transmission IC 710b, and thus may be controlled so that the signal for charging may be applied to the first coil 751a or the second coil 751b. There may be a period in which the signal for charging is simultaneously applied to the first coil 751a or the second coil 751b by the operation of the MCU 705, the first transmission IC 710a, or the second transmission IC 710b. For example, by the operation of the MCU 705, the first transmission IC 710a, or the second transmission IC 710b, there may be a period in which power is transmitted to a plurality of wireless power receiving devices existing outside the electronic device 101, and this period may be expressed as the electronic device 101 being in a simultaneous charging state. The simultaneous charging state may be classified according to the number of wireless power receiving devices to which power is transmitted from the electronic device 101. Alternatively, the signal for charging may be applied to only one power transmission coil among the plurality of power transmission coils 751a and 751b by the operation of the MCU 705, the first transmission IC 710a, or the second transmission IC 710b. For example, by the operation of the MCU 705, the first transmission IC 710a, or the second transmission IC 710b, power may be transmitted to only one wireless power receiving device among the plurality of wireless power receiving devices existing outside the electronic device 101, and this may be expressed as the electronic device 101 being in a single charging state.

According to an embodiment, the MCU 705, the first transmission IC 710a or the second transmission IC 710b may identify a charging mode corresponding to the first transmission IC 710a or the second transmission IC 710b. For example, the MCU 705 or the first transmission IC 710a may identify the charging mode corresponding to power transmission by the first power transmission coil 751a. The MCU 705 or the second transmission IC 710b may identify a charging mode corresponding to power transmission by the second power transmission coil 751b. The MCU 705 may simultaneously or individually identify the charging mode corresponding to power transmission by the first power transmission coil 751a and the charging mode corresponding to power transmission by the second power transmission coil 751b. For example, when the electronic device 101 is in the simultaneous charging state, the charging modes corresponding to the first transmission IC 710a or the second transmission IC 710b may be the same or different. The MCU 705, the first transmission IC 710a, or the second transmission IC 710b may identify the level of limit power and/or the level of release power corresponding to the charging mode corresponding to the first transmission IC 710a or the second transmission IC 710b.

According to various embodiments, a USB socket 701 may be a socket into which a USB type connection terminal is insertable. Those skilled in the art will understand that the USB socket 701 can be replaced if it is an interface that can receive power from the outside. An over-voltage protection (OVP) circuit 703 may perform an operation for protecting hardware within the electronic device 101 when an over-voltage is applied from the outside. A regulator 707 may be, for example, a low drop output (LDO) regulator. A temperature sensor 709 may measure the temperature of at least one point within the electronic device 101, and the MCU 705 may perform an over temperature protection operation based on the temperature.

FIG. 8 is a flowchart illustrating an operation method of an electronic device according to an embodiment. FIG. 8 will be described with reference to FIG. 9. FIG. 9 is a diagram illustrating an operation of an electronic device according to an embodiment.

According to an embodiment, in operation 801, the electronic device 101 (e.g., at least one of the MCU 705 and the plurality of transmission ICs 710a and 710b) may identify a charging state of the electronic device 101. For example, the electronic device 101 may determine whether the electronic device 101 is in a single charging state or a simultaneous charging state.

In operation 803, according to an embodiment, the electronic device 101 may identify a charging mode of the electronic device 101. For example, the electronic device 101 may identify the charging mode corresponding to the first transmission IC 710a or the second transmission IC 710b.

In operation 805, according to an embodiment, the electronic device 101 may identify the level of limit power and/or the level of release power based on the identified charging state (e.g., single charging state or simultaneous charging state) and/or the identified charging mode (normal charging mode or fast charging mode). For example, the electronic device 101 may control the transmitted charging power according to the level of the limit power and/or the release power identified based on the charging state and/or the charging mode.

For example, referring to FIG. 9, the electronic device 101 may determine the level of the limit power to be 9W in the case of the single charging state and the normal charging mode. At this time, although not shown in the figure, the level of the release power may be determined to be 8.5W. As another example, the electronic device 101 may determine the level of the limit power to be 12W in the single charging state and the fast charging mode. At this time, although not shown in the drawing, the level of the release power may be determined to be 11.5W. As another example, in a case in which the electronic device 101 is in the simultaneous charging state (e.g., a state of transmitting charging power to two wireless power receiving devices), when a charging mode corresponding to a specific transmission IC (e.g., the first transmission IC 710a) is the normal charging mode, the level of limit power corresponding to the specific transmission IC (e.g., the first transmission IC 710a) may be determined to be 8.5 W. At this time, although not shown in the drawing, the level of the release power may be determined to be 8W. In a case in which the electronic device 101 is in the simultaneous charging state (e.g., a state of transmitting charging power to two wireless power receiving devices), when the charging mode corresponding to the specific transmission IC (e.g., the second transmission IC 710b) is the fast charging mode, the level of limit power corresponding to the specific transmission IC (e.g., the second transmission IC 710b) may be determined to be 10.5 W. At this time, although not shown in the drawing, the level of the release power may be determined to be 10W. The method of controlling the transmitted charging power based on the level of the limit power and/or the level of the release power has been described above.

Hereinafter, an electronic device 1001 capable of wirelessly receiving power by the electronic device 101 according to various embodiments will be described. The electronic device 1001 may be the wireless power receiving device 195. FIG. 10 is a block diagram illustrating an electronic device in a network environment according to various embodiments. Referring to FIG. 10, the electronic device 1001 in the network environment 1000 may communicate with an electronic device 1002 via a first network 1098 (e.g., a short-range wireless communication network), or at least one of an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module (SIM) 1096, or an antenna module 1097. In some embodiments, at least one of the components (e.g., the connecting terminal 1078) may be omitted from the electronic device 1001, or one or more other components may be added in the electronic device 1001. In some embodiments, some of the components (e.g., the sensor module 1076, the camera module 1080, or the antenna module 1097) may be implemented as a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor. For example, when the electronic device 1001 includes the main processor 1021 and the auxiliary processor 1023, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 10010, instead of the main processor 1021 while the main processor 10210 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 1023. According to an embodiment, the auxiliary processor 1023 (e.g., the neural processing unit) may include a hardware structure specified for artificial intelligence model processing. An artificial intelligence model may be generated by machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thererto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display module 1060 may include, for example, a display, a hologram device, or a projector and control circuitry to control a corresponding one of the display, hologram device, and projector. According to an embodiment, the display module 1060 may include a touch sensor adapted to detect a touch, or a pressure sensor adapted to measure the intensity of force incurred by the touch.

The audio module 1070 may convert a sound into an electrical signal and vice versa. According to an embodiment, the audio module 1070 may obtain the sound via the input module 1050, or output the sound via the sound output module 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, a HDMI connector, a USB connector, a SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to one embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as BluetoothTM, wireless-fidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1097 may transmit or receive a signal or power to or from the outside (e.g., the external electronic device) of the electronic device. According to an embodiment, the antenna module 1097 may include an antenna including a radiating element composed of a conductive material or a conductive pattern formed in or on a substrate (e.g., a printed circuit board (PCB)). According to an embodiment, the antenna module 1097 may include a plurality of antennas (e.g., array antennas). In such a case, at least one antenna appropriate for a communication scheme used in the communication network, such as the first network 1098 or the second network 1099, may be selected, for example, by the communication module 1090 (e.g., the wireless communication module) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

According to various embodiments, the antenna module 1097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 or 1004 may be a device of a same type as, or a different type, from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In another embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

According to various embodiments, an electronic device 101 for transmitting charging power to at least one wireless power receiving device 195 may include a power transmission coil 251, a power supplier 220 configured to provide DC charging power, an inverter 250 configured to apply AC charging power to the power transmission coil based on the DC charging power provided from the power supplier, a communication module 260 configured to identify a CEP from the at least one wireless power receiving device, and at least one processor (e.g., the MCU 705 or the transmission IC 210), wherein the at least one processor may be configured to identify the level of the DC charging power provided to the inverter by the power supplier, and perform at least one operation for reducing the AC charging power in response to the identification of the CEP requesting an increase in power based on the identified level of the DC charging power exceeding a first reference value.

According to various embodiments, the at least one processor may be configured to perform at least one operation for reducing the AC charging power by controlling the power supplier to reduce the DC charging power.

According to various embodiments, the at least one processor may be configured to control the power supplier to reduce the DC charging power by reducing a driving voltage of the DC charging power by a predetermined amount in response to the identification of the CEP requesting the increase in power.

According to various embodiments, the at least one processor may be configured to perform at least one operation for reducing the AC charging power by performing an operation for increasing a driving frequency of the AC charging power.

According to various embodiments, the at least one processor may be configured to perform the operation for increasing the driving frequency of the AC charging power by increasing a period by a gate voltage provided from a gate driver 430 of the electronic device to the inverter by a predetermined amount, in response to the identification of the CEP requesting the increase in power.

According to various embodiments, the electronic device may further include a power sensor 240, and the at least one processor may be configured to identify the level of the DC charging power provided to the inverter by the power supplier based on data from the power sensor.

According to various embodiments, the at least one processor may be further configured to stop the at least one operation for reducing the AC charging power based on the fact that the level of the DC charging power provided to the inverter by the power supplier is equal to or less than a second reference value smaller than the first reference value.

According to various embodiments, the at least one processor may be configured to stop the at least one operation for reducing the AC charging power based on the fact that a state in which the level of the DC charging power provided to the inverter by the power supplier is equal to or less than the second reference value is maintained for a predetermined time or more.

According to various embodiments, the at least one processor may be further configured to identify a charging mode of the electronic device and identify the first reference value corresponding to the identified charging mode.

According to various embodiments, the at least one processor may be further configured to identify the number of the at least one wireless power receiving devices receiving the charging power from the electronic device, and identify the first reference value corresponding to the identified number of the at least one wireless power receiving devices.

According to various embodiments, an operation method of an electronic device 101 may include identifying the level of DC charging power provided to an inverter 250 of the electronic device by a power supplier 220 of the electronic device, controlling a communication module 260 of the electronic device to identify a CEP from at least one wireless power receiving device 195, and performing at least one operation for reducing AC charging power applied from the inverter to a power transmission coil 251 of the electronic device in response to identification of the CEP requesting an increase in power based on the identified level of the DC charging power exceeding a first reference value.

According to various embodiments, the method may include performing at least one operation for reducing the AC charging power by controlling the power supplier to reduce the DC charging power.

According to various embodiments, the method may include controlling the power supplier to reduce the DC charging power by reducing a driving voltage of the DC charging power by a predetermined amount in response to the identification of the CEP requesting the increase in power.

According to various embodiments, the method may include performing at least one operation for reducing the AC charging power by performing an operation for increasing a driving frequency of the AC charging power.

According to various embodiments, the method may include performing the operation for increasing the driving frequency of the AC charging power by increasing a period by a gate voltage provided from a gate driver 430 of the electronic device to the inverter by a predetermined amount, in response to the identification of the CEP requiring the increase in power.

According to various embodiments, the method may include identifying the level of the DC charging power provided to the inverter by the power supplier based on data from the power sensor 240.

According to various embodiments, the method may further include stopping the at least one operation for reducing the AC charging power based on the fact that the level of the DC charging power provided to the inverter by the power supplier is equal to or less than a second reference value smaller than the first reference value.

According to various embodiments, the method may include stopping the at least one operation for reducing the AC charging power based on the fact that a state in which the level of the DC charging power provided to the inverter by the power supplier is equal to or less than the second reference value is maintained for a predetermined time or more.

According to various embodiments, the method may further include identifying a charging mode of the electronic device, and identifying the first reference value corresponding to the identified charging mode.

According to various embodiments, the method may further include identifying the number of the at least one wireless power receiving devices receiving the charging power from the electronic device, and identifying the first reference value corresponding to the identified number of the at least one wireless power receiving devices.

According to various embodiments, an electronic device 101 for transmitting charging power to at least one wireless power receiving device 195 may include a power transmission coil 251; an inverter 250 configured to generate the charging power in the power transmission coil; a power sensor 240 configured to detect a voltage and/or current of a signal applied to the power transmission coil or the inverter; a communication module 260 configured to receive a packet from the at least one wireless power receiving device; and at least one processor (e.g., the MCU 705 or the transmission IC 210), wherein the at least one processor may be configured to identify the voltage and/or current detected using the power sensor, and perform at least one operation for reducing the charging power in response to identification of the packet requesting an increase in power received using the communication module based on the identified level of the voltage and/or current exceeding a first reference value.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor 201) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device for transmitting charging power to at least one wireless power receiving device, the electronic device comprising:
a power transmission coil;
a power supplier configured to provide DC charging power;
an inverter configured to apply AC charging power to the power transmission coil based on the DC charging power provided from the power supplier;
a communication module configured to identify a first packet from the at least one wireless power receiving device; and
at least one processor,
wherein the at least one processor is configured to:
identify the level of the DC charging power provided to the inverter by the power supplier, and
perform at least one operation for reducing the AC charging power in response to the identification of the first packet requesting an increase in power based on the identified level of the DC charging power exceeding a first reference value.

2. The electronic device of claim 1, wherein the at least one processor is configured to perform the at least one operation for reducing the AC charging power by controlling the power supplier to reduce the DC charging power.

3. The electronic device of claim 2, wherein the at least one processor is configured to control the power supplier to reduce the DC charging power by reducing a driving voltage of the DC charging power by a predetermined amount in response to the identification of the first packet requesting the increase in power.

4. The electronic device of claim 1, wherein the at least one processor is configured to perform the at least one operation for reducing the AC charging power by performing an operation for increasing a driving frequency of the AC charging power.

5. The electronic device of claim 4, wherein the at least one processor is configured to perform the operation for increasing the driving frequency of the AC charging power by increasing a period by a gate voltage provided from a gate driver of the electronic device to the inverter by a predetermined amount, in response to the identification of the first packet requesting the increase in power.

6. The electronic device of claim 1, further comprising a power sensor,
wherein the at least one processor is configured to identify the level of the DC charging power provided to the inverter by the power supplier based on data from the power sensor.

7. The electronic device of claim 1, wherein the at least one processor is further configured to stop the at least one operation for reducing the AC charging power based on the fact that the level of the DC charging power provided to the inverter by the power supplier is equal to or less than a second reference value smaller than the first reference value.

8. The electronic device of claim 7, wherein the at least one processor is further configured to stop the at least one operation for reducing the AC charging power based on the fact that a state in which the level of the DC charging power provided to the inverter by the power supplier is equal to or less than the second reference value is maintained for a predetermined time or more.

9. The electronic device of claim 1, wherein the at least one processor is further configured to:
identify a charging mode of the electronic device; and
identify the first reference value corresponding to the identified charging mode.

10. The electronic device of claim 1, wherein the at least one processor is further configured to:
identify the number of the at least one wireless power receiving devices receiving the charging power from the electronic device; and
identify the first reference value corresponding to the identified number of the at least one wireless power receiving devices.

11. An operation method of an electronic device, the operation method comprising:
identifying a level of DC charging power provided to an inverter of the electronic device by a power supplier of the electronic device;
controlling a communication module of the electronic device to identify a first packet from at least one wireless power receiving device; and
performing at least one operation for reducing AC charging power applied from the inverter to a power transmission coil of the electronic device in response to identification of the first packet requesting an increase in power based on the identified level of the DC charging power exceeding a first reference value.

12. The operation method of claim 11, further comprising performing the at least one operation for reducing the AC charging power by controlling the power supplier to reduce the DC charging power.

13. The operation method of claim 12, further comprising controlling the power supplier to reduce the DC charging power by reducing a driving voltage of the DC charging power by a predetermined amount in response to the identification of the first packet requesting the increase in power.

14. The operation method of claim 11, further comprising performing the at least one operation for reducing the AC charging power by performing an operation for increasing a driving frequency of the AC charging power.

15. An electronic device for transmitting charging power to at least one wireless power receiving device, the electronic device comprising:
a power transmission coil;
an inverter configured to generate the charging power in the power transmission coil;
a power sensor configured to detect a voltage and/or current of a signal applied to the power transmission coil or the inverter;
a communication module configured to receive a packet from the at least one wireless power receiving device; and
at least one processor,
wherein the at least one processor is configured to:
identify the voltage and/or current detected using the power sensor; and
perform at least one operation for reducing the charging power in response to identification of the packet requesting an increase in power received using the communication module based on the identified level of the voltage and/or current exceeding a first reference value.
